# FASCICULE DE BREVET EUROPEEN

(11) **EP 2 178 887 B1**
(45) Date de publication et mention de la délivrance du brevet: **03.06.2015**
(21) Numéro de dépôt: 08774893.5
(22) Date de dépôt: 08.07.2008
(51) Int. Cl.: C07F 5/00, C07F 9/142, C07F 9/30, C07F 9/38, C07F 9/40

(54) **PROCEDE DE PREPARATION D'UNE SOLUTION D'UN ORGANOPHOSPHATE DE TERRE RARE DANS UN SOLVANT ORGANIQUE**
VERFAHREN ZUR HERSTELLUNG EINER LÖSUNG EINES SELTENERDORGANOPHOSPHATS IN EINEM ORGANISCHEN LÖSUNGSMITTEL
METHOD FOR PREPARING A SOLUTION OF A RARE-EARTH ORGANOPHOSPHATE IN AN ORGANIC SOLVENT

(30) Priorité: 08.08.2007 FR 0705766
(43) Date de publication de la demande: 28.04.2010
(73) Titulaire: Rhodia Opérations, 93306 Aubervilliers (FR)
(72) Inventeur: MATHIVET, Thomas, F-17230 Bourg Chapon (FR)
(74) Mandataire: Senninger, Thierry
(86) Numéro de dépôt international: PCT/EP2008/058849
(87) Numéro de publication internationale: WO 2009/019100

(56) Documents cités:
- EP-A- 0 924 214
- WO-A-00/64910
- US-B1- 6 767 927

## Description

La présente invention concerne un procédé de préparation d'une solution d'un organophosphate de terre rare dans un solvant organique.

Les solutions d'organophosphates de terre rare sont utilisées notamment en tant que matière première pour la préparation de catalyseurs pour la polymérisation des diènes.

La préparation d'une solution d'un organophosphate de terre rare par attaque d'un sel inorganique de terre rare est généralement difficile. En effet, elle nécessite soit un large excès d'acide organophosphorique pour dissoudre totalement le sel inorganique de terre rare, engendrant des résidus d'acide dans le produit dont la présence n'est pas souhaitable pour l'application, soit des temps de réaction très longs incompatibles avec une application industrielle. Par ailleurs, la solution ainsi obtenue est généralement de haute viscosité (> 15000 cPs), ce qui rend quasiment impossible toute opération de filtration de solide résiduel présent dans le produit.

Il est donc important de disposer de procédés qui permettent d'obtenir dans des conditions industrielles des solutions à faible teneur en sels inorganiques de terre rare sous forme solide et aussi avec une acidité résiduelle acceptable.

L'objet de l'invention est donc de fournir un tel procédé.

Dans ce but, le procédé de l'invention pour la préparation d'une solution d'un organophosphate de terre rare dans un solvant organique est du type dans lequel on fait réagir avec un acide organophosphoré et en présence dudit solvant, un composé de terre rare choisi parmi les oxydes, les hydroxydes, les carbonates et les hydroxycarbonates de terre rare, et il est caractérisé en ce que la réaction a lieu en présence d'un promoteur choisi parmi les acides nitrique, chlorhydrique, acétique, formique et propionique et les sels de terres rares de ces acides.

WO 00/64910, US 6 767 927 et EP 0 924 214 divulguent la préparation de solutions d'organophosphates de terre rare dont celle de la présente demande diffèrent par l'addition d'un promoteur acide autre que l'eau.

L'emploi d'un promoteur selon l'invention permet notamment de simplifier le procédé, de réduire le temps de réaction et d'obtenir une solution dont la teneur en solide résiduel peut être faible.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend les éléments du groupe constitué par l'yttrium et les éléments de la classification périodique de numéro atomique compris inclusivement entre 57 et 71.

Le procédé de l'invention s'applique tout particulièrement à la préparation d'un organophosphate d'une terre rare choisie parmi le néodyme, le lanthane, le praséodyme, le samarium et le cérium.

Le procédé de l'invention implique la réaction d'un composé de terre rare avec un acide organophosphoré.

Comme composés de terre rare on utilise ceux qui ont été mentionnés plus haut. Parmi ceux-ci, on utilise de préférence les oxydes.

L'acide organophosphoré peut être plus particulièrement choisi parmi les monoesters ou les diesters d'acide phosphorique, les acides phosphoniques et les acides phosphiniques.

Les monoesters ou les diesters d'acide phosphorique peuvent répondre aux formules respectives (RO)PO(OH)₂ et (RO)(R'O)PO(OH) dans lesquelles R et R', identiques ou différents, représentent des radicaux alkyle ou aryle.

A titre d'exemple R et R' peuvent être des radicaux n-butyle, isobutyle, pentyle, amyle, isopentyle, 2,2- diméthylhexyle, 2- éthylhexyle, 1-éthylhexyle, octyle, nonyle, décyle, 2-2 diméthyloctyle, tolyle, nonaphényle.

L'acide organophosphoré peut aussi être choisi parmi les acides phosphoniques de formules générales (RO)R'P(O)(OH) et RP(O)(OH)₂ dans lesquelles R et R', identiques ou différents, représentent des radicaux alkyle ou aryle. A titre d'exemple R et R' peuvent être des radicaux n-butyle, isobutyle, pentyle, amyle, isopentyle, 2,2- diméthylhexyle, 2- éthylhexyle, 1-éthylhexyle, octyle, nonyle, décyle, 2-2 diméthyloctyle, tolyle, nonaphényle.

L'acide organophosphoré peut encore être choisi parmi les acides phosphiniques de formules générales R(R')P(O)OH et R(H)P(O)OH dans lesquelles R et R', identiques ou différents, représentent des radicaux alkyle ou aryle. A titre d'exemple R et R' peuvent être des radicaux n-butyle, isobutyle, pentyle, amyle, isopentyle, 2,2- diméthylhexyle, 2- éthylhexyle, 1-éthylhexyle, octyle, nonyle, décyle, 2-2 diméthyloctyle, tolyle, nonaphényle.

On peut bien entendu utiliser des mélanges des acides organophosphorés décrits ci-dessus.

La caractéristique essentielle de l'invention est que la réaction entre le composé de terre rare et l'acide organophosphoré a lieu en présence d'un promoteur du type donné plus haut.

La réaction est généralement conduite en mélangeant le composé de terre rare, l'acide organophosphoré et le promoteur dans le solvant organique.

Le solvant organique utilisé est généralement un solvant hydrocarboné, plus particulièrement un solvant aliphatique, cycloaliphatique voire aromatique.

Ce solvant peut être choisi dans le groupe comprenant l'hexane, le cyclohexane, le méthylcyclohexane, l'heptane, le méthylpentane, le méthylcyclopentane, le pentane, le 3-méthylpentane, le 2-méthylpentane, le 2,3-diméthylpentane et leurs isomères, le toluène et les xylènes et les mélanges de ceux-ci. On préfère l'hexane, le cyclohexane, le méthylcyclohexane leurs isomères et leurs mélanges. Les solvants hydrocarbonés disponibles dans le commerce sont les hexanes EXXSOL® fournis par Exxon, l'heptane EXXSOL® fourni par Exxon, les ISOPAR®, ISOPAR-M® et ISOPAR-L® fournis par Exxon, le SOLVENT 140® fourni par Exxon, le MINERAL SPIRITS 66® fournis par Philips, le cyclohexane fourni par BASF et le méthylcyclohexane fourni par Total Fluides.

Les quantités de promoteur à utiliser vont être précisées ci-dessous. On notera que d'une manière générale la quantité minimale est celle à partir de laquelle le promoteur peut jouer un rôle, c'est-à-dire à partir de laquelle le rendement de la réaction est acceptable. Ce rendement est acceptable quand le milieu réactionnel à l'issue de la réaction ne présente plus de turbidité. Cette quantité est donc facilement déterminable pour l'homme du métier. La quantité maximale n'est généralement pas critique et peut être fixée en fonction des contraintes industrielles. Les quantités qui sont données ci-dessous, ne le sont qu'à titre d'exemples illustratifs et doivent donc être comprises comme se situant entre ces quantités minimale et maximale.

Lorsque le promoteur est un acide on utilise une quantité d'acide qui, exprimée par le rapport molaire acide/terre rare, est généralement comprise entre environ 0,005 et environ 0,2, plus particulièrement entre 0,005 et 0,1 et encore plus particulièrement entre 0,005 et 0,06.

On peut noter que l'acide peut être utilisé pur ou en solution concentrée ou diluée.

Comme indiqué plus haut, le promoteur peut être un nitrate, un chlorure, un acétate, un formiate ou un propionate de terre rare. Dans ce cas, la quantité de sel, exprimée par le rapport molaire sel/terre rare, est généralement comprise entre environ 0,005 et environ 0,2, plus particulièrement entre 0,005 et 0,1.

La réaction du composé de terre rare avec l'acide organophosphoré en présence du promoteur se fait généralement à une température d'au moins 60°C, plus particulièrement comprise entre 80°C et 100°C. Des températures supérieures à 100°C sont envisageables néanmoins.

La durée de cette attaque peut varier dans de larges limites par exemple entre 1 et 6 heures et en pratique elle peut être comprise entre 1 et 2 heures.

De préférence la réaction est conduite sous atmosphère inerte, azote par exemple, pour éviter des contaminations de la solution par l'oxygène de l'air.

A l'issue de la réaction, on obtient une solution d'organophosphate de terre rare.

La solution peut éventuellement être lavée à l'eau pour éliminer les résidus acides. Ce lavage peut se faire en mélangeant la solution organique avec de l'eau, en agitant, en laissant décanter puis en séparant la phase aqueuse de la phase organique.

Cette solution peut être aussi éventuellement soumise à une distillation pour éliminer l'eau résiduelle. Il est possible de cette manière d'obtenir une solution dont la teneur en eau soit d'au plus 500 ppm, plus particulièrement d'au plus 100 ppm. Cette teneur en eau, exprimée par le rapport molaire eau/terre rare, peut être d'au plus 0,2, plus particulièrement d'au plus 0,04.

L'acidité résiduelle, exprimée par le rapport molaire acide organophosphoré/terre rare, peut être d'au plus 0,75, plus particulièrement d'au plus 0,6 et encore plus particulièrement d'au plus 0,4.

Le rendement de la réaction est élevé dans la mesure où il ne reste en solution qu'une très faible quantité de composé de terre rare de départ. La solution présente en effet un aspect limpide. Le rendement obtenu est généralement d'au moins 95%, un rendement de 100% peut être atteint.

Il est possible d'ajuster la viscosité de la solution obtenue en y ajoutant un composé choisi parmi les alcools, les acides carboxyliques ou les acides phosphoriques. A titre d'exemples non limitatifs, on peut citer l'éthanol, l'éthylène glycol, le propylène glycol, le dipropylène glycol, l'acide acétique, l'acide propionique.

Comme indiqué plus haut les solutions d'organophosphate de terre rare issues du procédé de l'invention peuvent être utilisées pour la préparation de catalyseurs pour la polymérisation des diènes comme le butadiène et l'isoprène.

Des exemples vont maintenant être donnés.

### EXEMPLE 1

### - Comparatif

Dans un réacteur préalablement inerté à l'argon, on introduit 3,03 g d'oxyde de néodyme contenant 72,4% poids de néodyme, 17,39 g d'acide di-2-éthylhexylphosphorique (DEHPA), 80 g de méthylcyclohexane (MCH) et 25,9 g d'eau. Le mélange est agité et porté à 95°C jusqu'à disparition complète du solide, c'est-à-dire pour ce cas 1h. Le mélange est refroidi et décanté. 22,5 g d'eau sont ainsi retirés du mélange. L'azéotrope eau/MCH est ensuite distillé avec un montage type Dean Stark. 84 g d'une solution de néodyme di(2-éthylhexyl)phosphate dans le MCH sont ainsi obtenus.

Cette solution se caractérise par une apparence limpide, une teneur en néodyme en solution de 2,65%, une acidité libre résiduelle exprimée en pourcentage en poids de DEHPA de 2,2% et une teneur en eau de 382 ppm. Dans ce cas, les ratios molaires sont les suivants : DEHPA/Nd = 0,37 et eau/Nd = 0,11. Le rendement d'attaque est de 100%.

### EXEMPLE 2

Dans un réacteur préalablement inerté à l'argon, on introduit 3,03 g d'oxyde de néodyme contenant 72,4% poids de néodyme, 17,39 g d'acide di-2-éthylhexylphosphorique (DEHPA), 80 g de méthylcyclohexane (MCH) et 1,8 ml d'acide nitrique à 0,5 mol/l. Cette quantité d'acide nitrique correspond à 0,06 équivalent molaire d'HNO3 par rapport au néodyme. Le mélange est agité et porté à 80°C jusqu'à ce que l'on ne puisse plus distinguer visuellement la présence de solide, c'est-à-dire pour ce cas 3h. Le mélange est refroidi. 3 lavages avec 20 g d'eau sont successivement réalisés pour éliminer les résidus d'acide nitrique. Chaque lavage comporte une phase d'agitation de 30 minutes puis une phase de décantation de 30 minutes également sauf pour la dernière décantation qui dure 12h. 18 g, 18 g puis 23 g d'eau sont ainsi successivement récupérés. L'azéotrope eau/MCH est ensuite distillé avec un montage type Dean Stark. 100 g d'une solution de néodyme di(2-éthylhexyl)phosphate dans le MCH sont ainsi obtenus.

Cette solution se caractérise par une apparence limpide, une teneur en néodyme en solution de 2,15%, une acidité libre résiduelle exprimée en pourcentage en poids de DEHPA de 3,0% et une teneur en eau de 72 ppm. Dans ce cas, les ratios molaires sont les suivants : DEHPA/Nd = 0,62 et eau/Nd = 0,03. Le rendement d'attaque est de 98%.

### EXEMPLE 3

Dans un réacteur préalablement inerté à l'argon, on introduit 3,03 g d'oxyde de néodyme contenant 72,4% poids de néodyme, 17,39 g d'acide di-2-éthylhexylphosphorique (DEHPA), 80 g de méthylcyclohexane (MCH) et 0,9 ml d'acide chlorhydrique à 1 mol/l. Cette quantité d'acide chlorhydrique correspond à 0,06 équivalent molaire d'HCl par rapport au néodyme. Le mélange est agité et porté à 80°C pendant 3h. Le mélange est refroidi. 3 lavages avec 20g d'eau sont successivement réalisés pour éliminer les résidus d'acide chlorhydrique. Chaque lavage comporte une phase d'agitation de 30 minutes puis une phase de décantation de 30 minutes également sauf pour la dernière décantation qui dure 12h. L'azéotrope eau/MCH est ensuite distillé avec un montage type Dean Stark. Une solution limpide de néodyme di(2-éthylhexyl)phosphate dans le MCH est ainsi obtenue.

Cette solution se caractérise par une apparence limpide, une teneur en néodyme en solution de 2,25%, une acidité libre résiduelle exprimée en pourcentage en poids de DEHPA de 2,85% et une teneur en eau de 249 ppm. Dans ce cas, les ratios molaires sont les suivants : DEHPA/Nd = 0,56 et eau/Nd = 0,09. Le rendement d'attaque est de 100%.

### EXEMPLE 4

Dans un réacteur préalablement inerté à l'argon, on introduit 2,88 g d'oxyde de néodyme contenant 72,4% poids de néodyme, 0,53 g d'une solution aqueuse de nitrate de néodyme à 24,4% poids de néodyme, 17,39 g d'acide di-2-éthylhexylphosphorique (DEHPA) et 80 g de méthylcyclohexane (MCH). Le mélange est agité et porté à 80°C jusqu'à disparition complète du solide, c'est-à-dire pour ce cas 1 h. Le mélange est refroidi. 3 lavages avec 20 g d'eau sont successivement réalisés pour éliminer les résidus inorganiques. Chaque lavage comporte une phase d'agitation de 30 minutes puis une phase de décantation de 30 minutes également sauf pour la dernière décantation qui dure 12h. L'azéotrope eau/MCH est ensuite distillé avec un montage type Dean Stark. Une solution limpide de néodyme di(2-éthylhexyl)phosphate dans le MCH est ainsi obtenue.

Cette solution se caractérise par une apparence limpide, une teneur en néodyme en solution de 2,1%, une acidité libre résiduelle exprimée en pourcentage en poids de DEHPA de 3,2% et une teneur en eau de 369 ppm. Dans ce cas, les ratios molaires sont les suivants : DEHPA/Nd = 0,68 et eau/Nd = 0,14. Le rendement d'attaque est de 99%.

### EXEMPLE 5

Dans un réacteur préalablement inerté à l'argon, on introduit 2,88 g d'oxyde de néodyme contenant 72,4% poids de néodyme, 0,58 g d'une solution aqueuse de chlorure de néodyme à 22,2% poids de néodyme, 17,39 g d'acide di-2-éthylhexylphosphorique (DEHPA) et 80 g de méthylcyclohexane (MCH). Le mélange est agité et porté à 80°C pendant 5h. Le mélange est refroidi. 3 lavages avec 20 g d'eau sont successivement réalisés pour éliminer les résidus inorganiques. Chaque lavage comporte une phase d'agitation de 30 minutes puis une phase de décantation de 30 minutes également sauf pour la dernière décantation qui dure 12h. L'azéotrope eau/MCH est ensuite distillé avec un montage type Dean Stark. Une solution limpide de néodyme di(2-éthylhexyl)phosphate dans le MCH est ainsi obtenue.

Cette solution se caractérise par une apparence limpide, une teneur en néodyme en solution de 2,05%, une acidité libre résiduelle exprimée en pourcentage en poids de DEHPA de 3,3% et une teneur en eau de 406 ppm. Dans ce cas, les ratios molaires sont les suivants : DEHPA/Nd = 0,72 et eau/Nd = 0,16. Le rendement d'attaque est de 98%.

### EXEMPLE 6

Dans un réacteur préalablement inerté à l'argon, on introduit 3,03 g d'oxyde de néodyme contenant 72,4% poids de néodyme, 16,15 g d'acide di-2-éthylhexylphosphorique (DEHPA), 80 g de méthylcyclohexane (MCH) et 1,8 ml d'acide nitrique à 0,5 mol/l. Cette quantité d'acide nitrique correspond à 0,06 équivalent molaire d'HNO₃ par rapport au néodyme. Le mélange est agité et porté à 80°C jusqu'à ce que l'on ne puisse plus distinguer visuellement la présence de solide, c'est-à-dire pour ce cas 3h. Le mélange est refroidi. 3 lavages avec 20 g d'eau sont successivement réalisés pour éliminer les résidus inorganiques. Chaque lavage comporte une phase d'agitation de 30 minutes puis une phase de décantation de 30 minutes également. 20 g, 19,5 g puis 19,5 g sont ainsi récupérés. L'azéotrope eau/MCH est ensuite distillé avec un montage type Dean Stark. Une solution de néodyme di(2-éthylhexyl)phosphate dans le MCH d'apparence limpide est ainsi obtenue. Elle se caractérise par une teneur en néodyme en solution de 2,05%, une acidité libre résiduelle exprimée en pourcentage en poids de DEHPA de 1,59% et une teneur en eau de 209 ppm. Dans ce cas, les ratios molaires sont les suivants : DEHPA/Nd = 0,34 et eau/Nd = 0,08. le rendement d'attaque est de 95%.

### EXEMPLE 7

Dans un réacteur préalablement inerté à l'argon, on introduit 3,03 g d'oxyde de néodyme contenant 72,4% poids de néodyme, 17,39 g d'acide di-2-éthylhexylphosphorique (DEHPA), 80 g de méthylcyclohexane (MCH) et 0,054 g d'acide acétique à 99,8%. Cette quantité d'acide acétique correspond à 0,06 équivalent molaire de CH₃COOH par rapport au néodyme. Le mélange est agité et porté à 80°C jusqu'à ce que l'on ne puisse plus distinguer visuellement la présence de solide, c'est-à-dire pour ce cas 1h. Le mélange est refroidi. 3 lavages avec 20 g d'eau sont successivement réalisés pour éliminer les résidus inorganiques. Chaque lavage comporte une phase d'agitation de 30 minutes puis une phase de décantation de 30 minutes également, sauf la dernière décantation qui dure une nuit. 16 g, 24,2 g puis 17,1 g sont ainsi récupérés. L'azéotrope eau/MCH est ensuite distillé avec un montage type Dean Stark. Une solution de néodyme di(2-éthylhexyl)phosphate dans le MCH d'apparence limpide est ainsi obtenue. Elle se caractérise par une teneur en néodyme en solution de 2,3%, une acidité libre résiduelle exprimée en pourcentage en poids de DEHPA de 2,65% et une teneur en eau de 77 ppm. Dans ce cas, les ratios molaires sont les suivants : DEHPA/Nd = 0,51 et eau/Nd = 0,026. le rendement d'attaque est de 100%.

## Revendications

1. Procédé de préparation d'une solution d'un organophosphate de terre rare dans un solvant organique dans lequel on fait réagir avec un acide organophosphoré choisi parmi les monoesters ou les diesters de l'acide phosphorique, les acides phosphoniques et les acides phosphiniques, et en présence dudit solvant, un composé de terre rare choisi parmi les oxydes, les hydroxydes, les carbonates et les hydroxycarbonates de terre rare, **caractérisé en ce que** la réaction a lieu en présence d'un promoteur choisi parmi les acides nitrique, chlorhydrique, acétique, formique et propionique et les sels de terres rares de ces acides.

2. Procédé selon la revendication 1, **caractérisé en ce qu'**on utilise un solvant hydrocarboné, plus particulièrement un solvant aliphatique ou cycloaliphatique.

3. Procédé selon l'une des revendications précédentes, **caractérisé en ce qu'**on prépare un organophosphate d'une terre rare choisie parmi le néodyme, le lanthane, le praséodyme, le samarium et le cérium.

4. Procédé selon l'une des revendications précédentes, **caractérisé en ce qu'**on conduit la réaction du composé de terre rare avec l'acide organophosphoré à une température d'au moins 60°C.

5. Procédé selon l'une des revendications précédentes, **caractérisé en ce qu'**on utilise un oxyde comme composé de terre rare pour réagir avec l'acide organophosphoré.

6. Utilisation d'un acide dans une réaction entre un acide organophosphoré choisi parmi les monoesters ou les diesters de l'acide phosphorique, les acides phosphoniques et les acides phosphiniques et un composé de terre rare choisi parmi les oxydes, les hydroxydes, les carbonates et les hydroxycarbonates de terre rare en présence d'un solvant organique permettant d'obtenir une solution d'un organophosphate de terre rare dans le solvant organique, l'acide étant choisi parmi les acides nitrique, chlorhydrique, acétique, formique et propionique et les sels de terres rares de ces acides, en tant que promoteur de la réaction.

## Patentansprüche

1. Verfahren zur Herstellung einer Lösung eines Seltenerdmetallorganophosphats in einem organischen Lösungsmittel, bei dem man eine aus Seltenerdmetalloxiden, -hydroxiden, -carbonaten und -hydroxycarbonaten ausgewählte Seltenerdmetallverbindung in Gegenwart eines Lösungsmittels mit einer aus Monoestern oder Diestern von Phosphorsäure, Phosphonsäuren und Phosphinsäuren ausgewählte Organophosphorsäure zur Reaktion bringt, **dadurch gekennzeichnet, dass** die Reaktion in Gegenwart eines aus Salpetersäure, Salzsäure, Essigsäure, Ameisensäure und Propionsäure und den Seltenerdmetallsalzen dieser Säuren ausgewählten Promotors durchgeführt wird.

2. Verfahren nach Anspruch 1, **dadurch gekennzeichnet, dass** man ein Kohlenwasserstoff-Lösungsmittel, insbesondere ein aliphatisches oder cycloaliphatisches Lösungsmittel, verwendet.

3. Verfahren nach einem der vorhergehenden Ansprüche, **dadurch gekennzeichnet, dass** man ein Organophosphat eines aus Neodym, Lanthan, Praseodym, Samarium und Cer ausgewählten Seltenerdmetalls herstellt.

4. Verfahren nach einem der vorhergehenden Ansprüche, **dadurch gekennzeichnet, dass** man die Reaktion der Seltenerdmetallverbindung mit der Organophosphorsäure bei einer Temperatur von mindestens 60°C durchführt.

5. Verfahren nach einem der vorhergehenden Ansprüche, **dadurch gekennzeichnet, dass** man als Seltenerdmetallverbindung zur Umsetzung mit der Organophosphorsäure ein Oxid verwendet.

6. Verwendung einer Säure bei einer Reaktion zwischen einer aus Monoestern oder Diestern von Phosphorsäure, Phosphonsäuren und Phosphinsäuren ausgewählten Organophosphorsäure und einer aus Seltenerdmetalloxiden, -hydroxiden, -carbonaten und -hydroxycarbonaten ausgewählten Seltenerdmetallverbindung in Gegenwart eines organischen Lösungsmittels, wodurch eine Lösung eines Seltenerdmetallorganophosphats in einem organischen Lösungsmittel erhältlich ist, wobei die Säure aus Salpetersäure, Salzsäure, Essigsäure, Ameisensäure und Propionsäure und den Seltenerdmetallsalzen dieser Säuren ausgewählt wird, als Promotor für die Reaktion.

## Claims

1. Process for preparing a solution of a rare-earth organophosphate in an organic solvent, in which a rare-earth compound chosen from rare-earth oxides, hydroxides, carbonates and hydroxycarbonates is reacted with an organophosphorus acid chosen from monoesters and diesters of phosphoric acid, phosphonic acids and phosphinic acids in the presence of said solvent, **characterized in that** the reaction is carried out in the presence of a promoter chosen from nitric acid, hydrochloric acid, acetic acid, formic acid and propionic acid and the rare-earth salts of these acids.

2. Process according to Claim 1, **characterized in that** a hydrocarbon-based solvent, more particularly an aliphatic or cycloaliphatic solvent, is used.

3. Process according to either of the preceding claims, **characterized in that** an organophosphate of a rare-earth metal chosen from neodymium, lanthanum, praseodymium, samarium and cerium is prepared.

4. Process according to one of the preceding claims, **characterized in that** the reaction of the rare-earth compound with the organophosphorus acid is carried out at a temperature of at least 60°C.

5. Process according to one of the preceding claims, **characterized in that** an oxide is used as rare-earth compound for reacting with the organophosphorus acid.

6. Use of an acid in a reaction between an organophosphorus acid chosen from monoesters or diesters of phosphoric acid, phosphonic acids and phosphinic acids and a rare-earth compound chosen from rare-earth oxides, hydroxides, carbonates and hydroxycarbonates in the presence of an organic solvent making it possible to obtain a solution of a rare-earth organophosphate in the organic solvent, the acid being chosen from nitric acid, hydrochloric acid, acetic acid, formic acid and propionic acid and the rare-earth salts of these acids, as reaction promoter.
